# EUROPÄISCHE PATENTANMELDUNG

(11) **EP 1 970 267 A1**
(43) Veröffentlichungstag der Anmeldung: **17.09.2008**
(21) Anmeldenummer: 08102053.9
(22) Anmeldetag: 27.02.2008
(51) Int. Cl.: B60S 1/08

(54) **Motoranordnung eines elektromotorischen Hilfsantriebs für Fahrzeuge**

(30) Priorität: 10.03.2007 DE 102007011760
(71) Anmelder: VALEO SYSTEMES D'ESSUYAGE, 78321 Le Mesnil Saint Denis (FR)
(72) Erfinder: McCuddy, Sarah, 74321 Bietigheim-Bissigen (DE)
(74) Vertreter: Rosolen-Delarue, Katell

(57) **Zusammenfassung**

Motoranordnung eines elektromotorischen Hilfsantriebs für Fahrzeuge, beispielsweise eines Scheibenwischerantriebs, mit einem Elektromotor (2), mit einer den Motor steuernden Steuerelektronik (3), mit wenigstens zwei Versorgungsanschlüssen (4,5) zum Anschließen der Motoranordnung an ein Gleichspannungsversorgungsnetz eines Fahrzeugs, sowie mit einer Schaltungsanordnung (6) zum Dokumentieren einer eventuellen Verpolung beim Anschluss der Motoranordnung.

## Beschreibung

Die Erfindung bezieht sich auf eine Motoranordnung für elektromotorische Hilfsantriebe für Fahrzeuge, beispielsweise Scheibenwischerantriebe, gemäß Oberbegriff Patentanspruch 1.

Motoranordnungen für elektromotorische Hilfsantriebe für Fahrzeuge, insbesondere Scheibenwischerantriebe, mit Elektromotoren und zugehöriger Steuerelektronik sind bekannt und werden in Fahrzeugen in zunehmendem Maße verwendet. Ein gewisses Problem besteht bei solchen Motoranordnungen darin, dass eine Verpolung, d.h. ein falsch gepolter Anschluss der Motoranordnung an das Gleichspannungsversorgungsnetz des jeweiligen Fahrzeugs in Betrieb zu Beschädigungen in der Steuerelektronik führen kann, sofern nicht besondere schaltungstechnische Schutzmaßnahmen vorgesehen sind, die einen Verpolschutz gewährleisten, allerdings die Herstellungskosten erhöhen.

Aufgabe der Erfindung ist es, eine Motoranordnung aufzuzeigen, die mit geringem schaltungstechnischen Aufwand insbesondere auch für Reklamationsfälle ein eindeutiges Dokumentieren einer Verpolung ermöglicht. Zur Lösung dieser Aufgabe ist eine Motoranordnung entsprechend dem Patentanspruch 1 ausgebildet.

Die Schaltungsanordnung zum Dokumentieren einer Verpolung besteht im einfachsten Fall aus der Serienschaltung eines Sicherungselementes und einer Diode, die sich bei einem richtig gepolten Anschluss der Motoranordnung an das Gleichspannungsversorgungsnetz eines Fahrzeugs im gesperrten Zustand befindet und somit einen Stromfluss durch das Sicherungselement verhindert, bei einer Verpolung, hingegen einen das Sicherungselement zerstörenden Stromfluss zulässt. Das Sicherungselement ist beispielsweise als Schmelzsicherung oder nach Art einer Schmelzsicherung ausgeführt, d.h. sie besteht im Wesentlichen aus einem Leiter, der bei einer Verpolung durch den dann fließenden Strom thermisch zerstört wird.

Weiterbildungen der Erfindung sind Gegenstand der Unteransprüche. Die Erfindung wird im Folgenden anhand der Figuren an Ausführungsbeispielen näher erläutert. Es zeigen:

Fig. 1 in einem vereinfachten Block- bzw. Funktionsdiagramm eine Motoranordnung eines elektromotorischen Hilfsantriebs für Fahrzeuge, beispielsweise eines Scheibenwischerantriebs, zusammen mit einer Schaltungsanordnung zum Dokumentieren einer Verpolung, und zwar bei ordnungsgemäßer Anschlusspolung der Motoranordnung;

Fig. 2 eine Darstellung ähnlich Figur 1, jedoch nach einer Verpolung;

Fig. 3 in einer Darstellung wie Figur 1 eine weitere Ausführungsform.

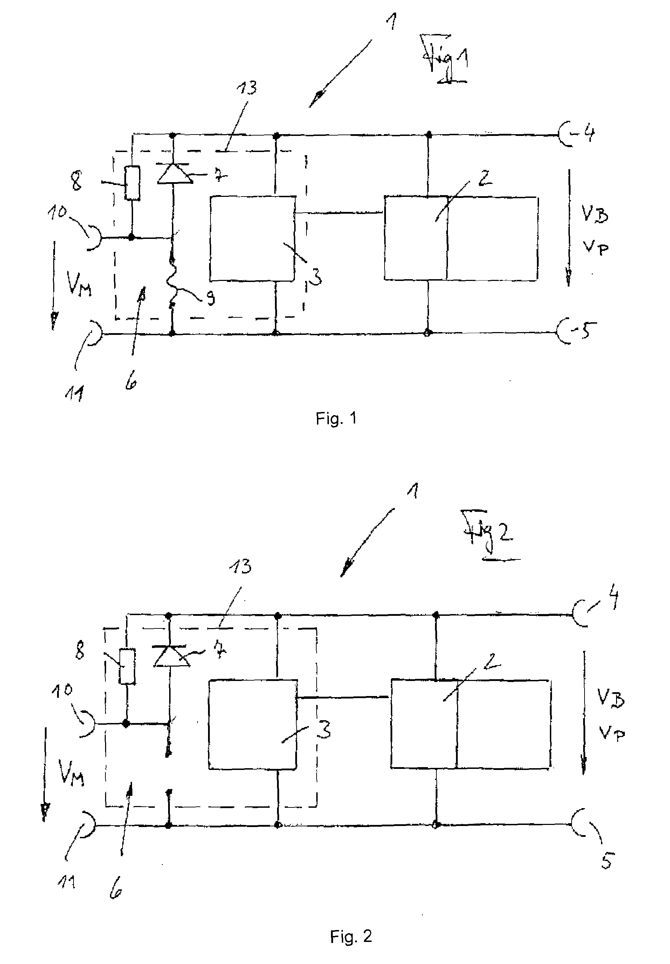

Die in den Figuren 1 und 2 allgemein mit 1 bezeichnete Motoranordnung, die beispielsweise Bestandteil eines elektromotorischen Scheibenwischerantriebs ist, umfasst u.a. den eigentlichen Elektromotor 2 sowie eine elektronische Steuereinrichtung 3, über die der Elektromotor 2 beispielsweise für einen reversierenden Betrieb und/oder einem Intervallbetrieb usw. gesteuert wird.

Für die elektrische Spannungsversorgung sind der Motor 2 und die Steuereinrichtung 3 mit Anschlüssen 4 und 5 nach dem Einbau an einen abgesicherten Stromkreis des Gleichspannungsversorgungsnetzes einen Fahrzeugs angeschlossen, und zwar bei richtiger Anschlusspolung mit dem Anschluss 4 an den positiven Pol und mit dem Anschluss 5 an den negativen Pol des Gleispannungsversorgungsnetzes bzw. der Fahrzeugbatterie, d.h. an die Fahrzeugkarosserie oder Fahrzeugmasse.

Zwischen den Anschlüssen 5 und 4 und damit bei der dargestellten Ausführungsform parallel zur Steuerelektronik 3 und zum Motor 2 ist eine Schaltungsanordnung 6 zum Dokumentieren einer eventuellen Verpolung vorgesehen. Die Schaltungsanordnung 6 besteht bei der dargestellten Ausführungsform im Wesentlichen aus einer Diode 7 an einem parallel zur Diode 7 angeordneten hochohmigen Widerstand 8 und aus einer Sicherung 9. Die Parallelschaltung aus der Diode 7 und dem Widerstand 8 ist in Serie mit der Sicherung 9 zwischen den Anschlüssen 4 und 5 vorgesehen. Die Diode 7 ist so gepolt, dass sie bei einem richtig gepolten Anschluss der Motoranordnung 1, d.h. bei mit dem positiven Pol des Gleichspannungsversorgungsnetzes verbundenem Anschluss 4 sperrt, bei einem verpolten Anschluss der Motoranordnung 1, d.h. bei mit dem positiven Pol der Gleichspannungsversorgungsnetzes verbundenem Anschluss 5 öffnet. Durch den dann über die Diode 7 und die Sicherung 9 fließenden Strom wird letztere zerstört, d.h. von den leitenden in den nicht leitenden Zustand überführt.

Durch entsprechende Ausbildung der Sicherung 9 ist der für die Zerstörung dieser Sicherung notwendige Strom größer als der Strom über den Widerstand 8, aber auch wesentlich kleiner als der maximale Strom, für den der die Motoranordnung 1 versorgende Stromkreis des Gleichspannungsversorgungsnetzes abgesichert ist.

Die Schaltungsanordnung 6 besitzt weiterhin zwei Messanschlüsse 10 und 11 von denen der Messanschluss 10 der Verbindungspunkt zwischen der Sicherung 9 und der Parallelschaltung aus der Diode 7 und dem Widerstand 9 ist. Der Messpunkt 11 ist mit dem Anschluss 5 verbunden oder identisch mit diesem Anschluss.

Zur Vermeidung von Manipulationen ist die Schaltungsanordnung 6 beispielsweise in einem gemeinsamen Gehäuse mit der Steuerelektronik 3 oder mit einem Teil dieser Steuerelektronik untergebracht, z.B. mit der Steuerelektronik 3 oder einem Teil dieser Steuerelektronik vergossen, wie dies in der Figur 1 mit der unterbrochenen Linie 13 angedeutet ist.

Bei einem Defekt der Steuerelektronik 3 kann beispielsweise im Fall einer Reklamation problemlos nachgewiesen werden, ob dieser Defekt evtl. aus einem vorausgegangenen Verpolen beim Anschluss der Motoranordnung 1 resultiert. Diese Überprüfung erfolgt z.B. durch eine Widerstandsmessung zwischen den Anschlüssen 10 und 11 oder aber bei mit den Anschlüssen 4 und 5 an die Spannung V_{B} des Gleichspannungsversorgungsnetzes oder an eine Prüfspannung V_{P} angeschlossener Motoranordnung 1 durch Messen der Spannung V_{M} an den Messanschlüssen 10 und 11. Lag kein Verpolen vor und ist demnach die Sicherung 9 intakt, weist die Messspannung V_{M} den Wert Null auf. War es hingegen beim Anschluss der Motoranordnung 1 zu einem Verpolen und damit zu einer Zerstörung der Sicherung 9 gekommen, ist die Messspannung V_{M} gleich der Spannung V_{B} oder V_{P}.

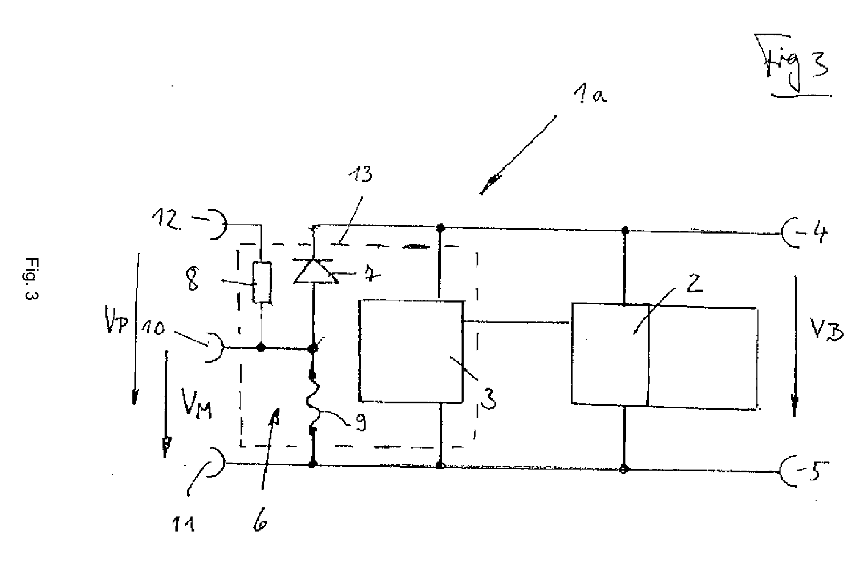

Figur 3 zeigt in einer Darstellung wie Figur 1 eine Motoranordnung 1a, die sich von der Motoranordnung 1 der Figur 1 lediglich dadurch unterscheidet, dass der Widerstand 8 nicht parallel zur Diode 7 liegt, sondern an einen gesonderten Messanschluss 12 angeschlossen ist, so dass dieser Messanschluss 12 über den Widerstand 8 mit dem Schaltungspunkt zwischen der Diode 7 und dem Sicherungselement verbunden ist. Die Überprüfung der Motoranordnung 1a erfolgt beispielsweise wiederum durch Widerstandsmessung an den Messanschlüssen 10 und 11 oder aber durch Messung der Spannung V_{M} an den Messanschlüssen 10 und 11 bei an den Messanschlüssen 12 und 11 anliegender Prüfspannung V_{P}. Die Motoranordnung 1a hat den Vorteil, dass im normalen Betrieb ein Dauerstrom über den Widerstand 8 und das Sicherungselement 9 vermieden ist.

Die Überprüfung der Motoranordnungen 1 und 1a bzw. die Auswertung der jeweiligen Messspannung V_{M} kann auch rechner- oder prozessorunterstützt erfolgen. Die jeweils zu prüfende Motoranordnung 1 bzw. 1a ist dabei in einer entsprechenden Prüfstation angeordnet, die z.B. über einen Daten- und Steuerbus mit einem Prozessor verbunden ist. Hierbei kann es notwendig sein, in der Prüfstation eine zusätzliche Beschaltung vorzusehen, insbesondere auch zur Anpassung der beim Prüfen an den Messanschlüssen 10 und 11 anliegenden Messspannung V M.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, anstelle einer nach Art einer Schmelzsicherung ausgeführten Sicherung 9, die im Wesentlichen nur aus einem Leiter besteht, der im Falle einer Verpolung thermisch zerstört wird, auch ein anderes als Sicherung wirkendes Element zu verwenden, beispielsweise ein Halbleiterelement, z.B. eine Halbleiterdiode, die im Falle einer Verpolung durch den dann fließenden erhöhten Strom thermisch zerstört, d.h. von dem leitenden in den nicht leitenden Zustand überführt wird.

**Bezugszeichenliste**
1, 1a Motoranordnung
2 Motor
3 Steuerelektronik für Motor 2
4, 5 Versorgungsanschlüsse der Motoranordnung 1
6 Dokumentierschaltung
7 Diode
8 Widerstand
9 Sicherung
10, 11, 12 Messanschlüsse
13 Gehäuse
V_{B} Batteriespannung
V_{P} Prüfspannung
V_{M} Messspannung

## Patentansprüche

1. Motoranordnung eines elektromotorischen Hilfsantriebs für Fahrzeuge, beispielsweise eines Scheibenwischerantriebs, mit einem Elektromotor (2), mit einer den Motor steuernden Steuerelektronik (3) sowie mit wenigstens zwei Versorgungsanschlüssen (4, 5) zum Anschließen der Motoranordnung (1, 1a) an ein Gleichspannungsversorgungsnetz eines Fahrzeugs, **gekennzeichnet durch** eine Schaltungsanordnung (6) zum Dokumentieren einer eventuellen Verpolung der Motoranordnung (1, 1a), wobei die Schaltungsanordnung (6) zum Dokumentieren aus wenigstens einer von mindestens einer Diode (7) und mindestens einem Sicherungselement (9) bestehenden Serienschaltung gebildet ist, die beim Verbinden der Versorgungsanschlüsse (4, 5) mit der an diesen Anschlüssen anliegenden Spannung oder einer hiervon abgeleiteten Spannung derart beaufschlagt wird, dass die wenigstens eine Diode (7) bei richtiger Polung der Versorgungsanschlüsse (4, 5) sperrt, bei falscher Polung der Versorgungsanschlüsse (4, 5) aber für einen das wenigstens eine Sicherungselement (9) zerstörenden Stromfluss öffnet.

2. Motoranordnung nach Anspruch 1, **dadurch gekennzeichnet, dass** die Schaltungsanordnung (6) zum Dokumentieren mit der vollen, an den Versorgungsanschlüssen (4, 5) anliegenden Spannung beaufschlagt wird.

3. Motoranordnung nach Anspruch 2, **dadurch gekennzeichnet, dass** die Schaltungsanordnung (6) zum Dokumentieren parallel zu den Versorgungsanschlüssen (4, 5) der Motoranordnung (1) liegt.

4. Motorschaltung nach Anspruch 1, **dadurch gekennzeichnet, dass** die Schaltungsanordnung (6) zum Dokumentieren mit einer gegenüber der an den Versorgungsanschlüssen (4, 5) anliegenden Spannung (V_{B}) reduzierten Spannung beaufschlagt wird.

5. Motoranordnung nach einem der vorhergehenden Ansprüche, **dadurch gekennzeichnet, dass** das wenigstens eine Sicherungselement (9) eine einen Schmelzleiter aufweisende Sicherung ist.

6. Motoranordnung nach einem der vorhergehenden Ansprüche, **dadurch gekennzeichnet, dass** das wenigstens eine Sicherungselement (9) ein Halbleiterelement, beispielsweise eine Diode ist.

7. Motoranordnung nach einem der vorhergehenden Ansprüche, **dadurch gekennzeichnet, dass** in der Schaltungsanordnung (6) zum Dokumentieren parallel zu der Diode (7) wenigstens ein Widerstand (8) vorgesehen ist.

8. Motoranordnung nach einem der vorhergehenden Ansprüche, **dadurch gekennzeichnet, dass** die Schaltungsanordnung (6) zum Dokumentieren wenigstens einen von Messanschlüssen (10, 11) gebildeten Messausgang parallel zum Sicherungselement (9) aufweist.

9. Motoranordnung nach einem der vorhergehenden Ansprüche, **gekennzeichnet durch** einen zusätzlichen Messanschluss (12), der über wenigstens einen Widerstand (8), vorzugsweise einen hochohmigen Widerstand mit einem Schaltungspunkt zwischen der Diode (7) und dem wenigstens einen Sicherungselement (9) verbunden ist.
